(19) Europäisches Patentamt
European Patent Office
Office européen des brevets

(11) Veröffentlichungsnummer: **0 127 061**
**B1**

(12) **EUROPÄISCHE PATENTSCHRIFT**

(45) Veröffentlichungstag der Patentschrift: **27.04.88**

(51) Int. Cl.⁴: **C 08 G 18/38,** C 08 G 18/46, C 08 G 18/80, D 06 M 15/564

(21) Anmeldenummer: **84105493.5**

(22) Anmeldetag: **15.05.84**

(54) **Perfluoralkylgruppen-enthaltende Polyurethane und Verfahren zu ihrer Herstellung.**

(30) Priorität: **27.05.83 DE 3319368**

(43) Veröffentlichungstag der Anmeldung: **05.12.84 Patentblatt 84/49**

(45) Bekanntmachung des Hinweises auf die Patenterteilung: **27.04.88 Patentblatt 88/17**

(84) Benannte Vertragsstaaten: **BE CH DE FR GB IT LI NL SE**

(56) Entgegenhaltungen:
**DE-A-2 503 877**
**FR-A-1 338 904**
**FR-A-2 154 551**
**US-A-3 547 894**
**US-A-3 759 874**
**US-A-4 046 944**

(73) Patentinhaber: **BAYER AG, Konzernverwaltung RP Patentabteilung, D-5090 Leverkusen 1 Bayerwerk (DE)**

(72) Erfinder: **Koemm, Ulrich, Dr., Haferkamp 3, D-5000 Köln 80 (DE)**
Erfinder: **Geisler, Klaus, Dr., Limpericherstrasse 77, D-5300 Bonn 3 (DE)**

**EP 0 127 061 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue, Perfluoralkylliganden-enthaltende Polyurethane mit der wiederkehrenden Formeleinheit

$$-[X(NH-\overset{\overset{O}{\|}}{C}-O-R_F-O-\overset{\overset{O}{\|}}{C}-NH)_{(n-1)}]-$$

und Kettenenden der allgemeinen Formel

$-YA_m$

Die Polyurethankette kann zusätzlich Einheiten der allgemeinen Formel

$$-\left\{-Z-[(NH-\overset{\overset{O}{\|}}{C}-E)_a-R-(E-\overset{\overset{O}{\|}}{C}-NH-)_b-]_{(p-1)}\right\}-$$

enthalten.

Dabei bedeuten:

X, Y und Z die Gerüstradikale aliphatischer oder aromatischer Di- und Polyisocyanate;

$R_F$ ein Mitglied aus der Gruppe der mono- oder difunktionellen N-(Sulfonylperfluoralkyl)aminoalkanolderivate,

E die Atome O oder S, sowie die Molekülgruppe -NR'-, mit R' = H, Alkyl oder Aryl;

R ein Di- oder Polyradikal, abgeleitet aus einem Di-(poly-)alkohol, -amin oder -merkaptan oder einer Kombination aus diesen;

a,b die Anzahl der -OH, -NR'H und -SH Funktionen in den eingesetzten Alkoholen, Aminen oder Merkaptanen $R-(EH)_{(a+b)}$, wobei a und b unabhängig voneinander ganze Zahlen von 0 bis 10, vorzugsweise 0 bis 3 bedeuten,

n, p die Anzahl der Isocyanatliganden an den Gerüstradikalen X und Z, wobei n und p unabhängig voneinander ganze Zahlen von 2 bis 25, vorzugsweise 2 bis 5 bedeuten.

A Isocyanatgruppen, die mit geeigneten Mitteln blockiert worden sind und bei erhöhten Temperaturen und Rückspaltung wieder für eine chemische Reaktion aktiviert werden können; derartige Blockierungsmittel sind z. B. Phenole, Oxime und Sulfit;

m die Anzahl der blockierten Isocyanatgruppen A am Isocyanatradikal Y mit einem Wert von 1 bis 5.

Die erfindungsgemäßen Perfluoralkylliganden-enthaltenden Polyurethane enthalten vorzugsweise 4-40 Gew.-% Fluor, haben vorzugsweise mittlere Molekulargewichte von 1000 bis 20 000 und haben an den Kettenenden blockierte Isocyanatgruppen, was eine Applikation des Polyurethans auf ein Substrat auch aus wäßriger Flotte erlaubt. Nach einer Deblockierung bei höheren Temperaturen wird durch eine Reaktion der freien Isocyanatgruppen das erfindungsgemäße Polyurethan chemisch auf dem Substrat fixiert. Die Öl- und Wasserfestigkeit anorganischer und organischer Gegenstände kann so dauerhaft verbessert werden.

Die vorliegende Erfindung betrifft ferner Verfahren zur Herstellung der erfindungsgemäßen Verbindungen.

Perfluoralkylliganden-enthaltende Urethane und ihre Anwendung zur Hydro- und Oleophobausrüstung fester Oberflächen sind in den deutschen Patentschriften 1 468 295 und 1 794 356, der französischen Patentschrift 1 316 488, sowie den US-Patentschriften 3 398 182, 3 484 281 und 3 896 251 beschrieben. Die darin beanspruchten Verbindungen zeigen eine wasser-und öl-abstoßende Wirkung; durch fehlende Haftung auf dem Substrat sind die Perfluoralkylliganden auf der Oberfläche des Substrates nicht optimal geometrisch orientiert. Verstärkt durch teilweise ungenügende filmbildende Eigenschaften sind unwirtschaftlich hohe Einsatzmengen zur Erzielung eines Effekts nötig. Daneben haften die vorbeschriebenen Verbindungen nur adhäsiv auf den Substraten, so daß eine Entfernung der Wirkstoffe mit Tensidwasser (Waschmittel) oder organischem Lösemittel (chem. Reinigung) unschwer möglich ist.

Perfluoralkylliganden enthaltende Urethane mit gegenüber den obengenannten bekannten Polyurethanen besserer Haftung sind aus den US-PS 3 759 874 und 4 046 944 sowie der FR-A 21 54 551 bekannt.

Die erfindungsgemäßen Perfluoralkylliganden-enthaltende Polyurethane verbinden eine chemische Fixierungsmöglichkeit der Polyurethankettenenden auf dem Substrat mit ausgezeichneten filmbildenden Eigenschaften. Dies bewirkt eine sehr gute, dauerhafte Hydro- und Olephobwirkung schon bei reduzierten Einsatzmengen - durch die Struktur und die chemische Fixierung der Verbindungen sind die Perfluoralkylliganden optimal geometrisch angeordnet. Chemische Fixierung wird möglich durch den gezielten Einbau blockierter Isocyanatgruppen an die Kettenenden des Polyurethans, die bei höheren Temperaturen wieder deblockieren und auf dem Substrat reagieren (thermische Fixierung).

Chemisch fixierte, Perfluoralkylliganden enthaltende Polyurethane werden durch Ablösevorgänge wie Waschen- oder chemisch Reinigen nicht vom Substrat entfernt, die Imprägnierung ist dauerhaft. Blockierte Isocyanate ermöglichen andererseits die Applizierung aus wäßrigen Suspensionen; dies erlaubt den gemeinsamen Auftrag des Perfluoralkylliganden-enthaltenden Polymeren mit anderen Additiven wie Flammschutz-, Fettungs-, Griff- und Gleitmitteln, antimikrobiellen Wirkstoffen oder Antistatika in einem Arbeitsschritt und ist aus Gründen der Ökologie wie der Arbeitssicherheit wünschenswert.

Das erfindungsgemäße Verfahren zur Herstellung der vorstehenden Perfluoralkylliganden-enthaltenden Polyurethane besteht darin, daß man Perfluoralkylligandenenthaltende Dialkohole der allgemeinen Formel

$R_F-(OH)_2$

in der $R_F$ die vorstehende Bedeutung hat - gegebenenfalls zusammen mit nichtfluorierten Di- oder Polyalkoholen bzw. -aminen oder -merkaptanen der allgemeinen Formel

$R\text{-}[EH]\,(a+b)$

in der R, E und (a+b) die vorstehenden Bedeutungen besitzen - in Mischung oder in Blöcken mit einem oder mehreren Di- oder Polyisocyanaten der allgemeinen Formeln

$X(NCO)_n$; $Y(NCO)_{(m+1)}$; $Z(NCO)_p$,

in denen X, Y, Z, n, p und m die vorstehend angegebenen Bedeutungen haben, im Überschuß kondensiert, so daß die entstehenden Polyurethanketten bzw. -netze an den Kettenenden freie Isocyanatgruppen besitzen, die abschließend mit einer geeigneten Schutzgruppe blockiert werden.

Bekannte Blockierungsmittel für Isocyanate sind z. B. Oxime, Sulfite und Phenole.

Kondensation und Blockierung werden zweckmäßigerweise in einem aprotischen polaren Lösemittel durchgeführt, geeignet sind z. B. Aceton, MIBK, THF, DMF, Essigsäureester oder N-Methylpyrrolidon. Die Urethankondensation wird dabei bevorzugt im Temperaturbereich von 20-110°C, die Blockierung im Bereich von 10-60°C, durchgeführt. Der Reaktionsfortschritt kann analytisch, speziell IR-spektroskopisch, verfolgt werden. Die eingesetzten Reagentien und Lösemittel müssen frei von Wasser sein, ein Arbeiten unter Schutzgasatmosphäre ist von Vorteil.

Der Auftrag der erfindungsgemäßen Perfluoralkylgruppenenthaltenden Polyurethane auf Substrate kann aus organischen Lösemitteln wie Ketonen, Ethern, Estern, Alkoholen oder Halogenkohlenwasserstoffen erfolgen, aus ökologischen wie sicherheitstechnischen Gründen wird die Applikation aus wäßrigen Dispersionen jedoch bevorzugt.

Glatte, poröse oder fasrige Oberflächen können mit den erfindungsgemäßen Perfluoralkylgruppenenthaltenden Polyurethanen ausgerüstet werden. Beispiele für derartige substrate sind Papier, Textilgewebe und -fasern, Gläser, Kunststoffe, Leder, Holz oder Metallgewebe.

Bei der Behandlung von Gegenständen erzeugen 0,0001 bis 1 Gew.-%, vorzugsweise 0,001 bis 0,1 Gew.-% gebundenes Fluor, bezogen auf das Gewicht des Gegenstandes, die gewünschten Oberflächeneigenschaften. Auf die Fläche des Substrats entspricht dies etwa 0,01 bis 100 mg gebundenes Fluor pro $m^2$.

Die $R_f$ -Einheiten sind bevorzugt ausgewählt aus mono- oder difunktionellen N-Sulfonylperfluoralkyl-Aminoalkanolderivaten.

Beispiele für die erfindungsgemäß verwendeten Perfluoralkylliganden-enthaltenden Dialkohole sind folgende:

A $C_4F_9SO_2N(C_2H_4OH)_2$

B $C_8F_{17}SO_2N(C_2H_4OH)_2$

C 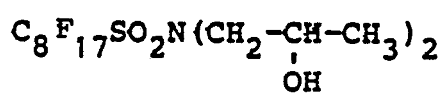

D 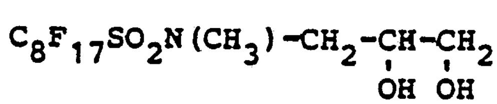

E 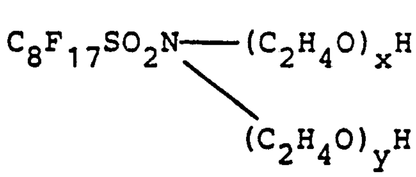

$x + y = 3\text{-}30$

F $C_4F_9-O-C_4F_8-SO_2N(C_2H_4OH)_2$

G $C_8F_{17}SO_2NH-C(=O)-O-(CH_2)_2-C(C_2H_5)(C_2H_4OH)_2$

Die gegebenenfalls zusätzlich zum Perfluoralkylgruppen enthaltenden Dialkohol verwendeten, reaktiven Wasserstoff enthaltenden di- oder polyfunktionellen Reaktionskomponenten der Formel $R\text{-}(E)_{(a+b)}$ kommen aus der Gruppe der Di- oder Polyole, -merkaptane oder -amine. Beispiele hierfür sind:

K $HO-C_2H_4-OH$

L 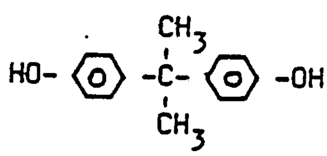

M $H(OC_2H_4)_j(OC_3H_6)_k-OH$ $j + k = 2-100$

N $HO-CH_2-CH(OH)-CH_2-OH$

O $C_2H_5-C-(C_2H_4OH)_3$

P $HO-C_2H_4-S-C_2H_4OH$

Q $C(C_2H_4OH)_4$

R $H_2N-(CH_2)_w-NH_2$ $w = 1-12$

S $HS-CH_2-\underset{\displaystyle SH}{\underset{|}{CH}}-CH_2-SH$

T $HS-C_2H_4-SH$

U 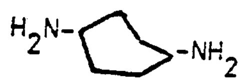

Beispielhafte Di- und Polyisocyanate, die im erfindungsgemäßen Verfahren eingesetzt werden können, sind im folgenden aufgezählt. Die beispielhaften Di- und Polyisocyanate können auch weitere Perfluoralkylketten als Liganden oder Brücken enthalten.

Di- und Polyisocyanate der allgemeinen Formel X $(NCO)_n$, Y $(NCO)_{(m+1)}$ und Z $(NCO)_p$:

I 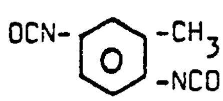

II $OCN-(CH_2)_6-NCO$

III 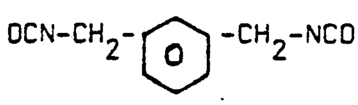

IV 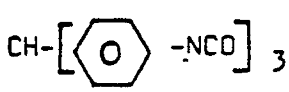

V 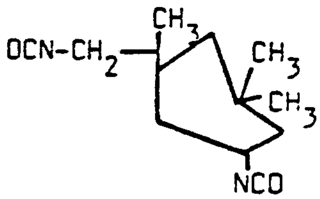

VI 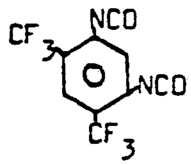

VII 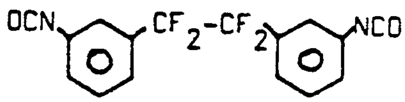

VIII 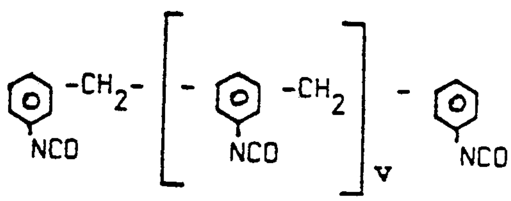 v = 0-15

IX 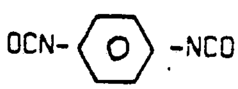

Beispielhafte Blockierungsmittel, die im erfindungsgemäßen Verfahren eingesetzt werden, sind z. B.

1 $CH_3-C(C_2H_5)=N-OH$

2 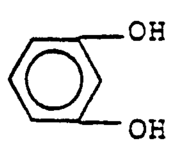

3 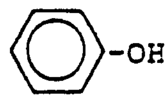

4 $NaHSO_3$

5 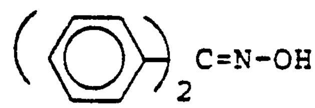

In Tabelle 1 sind eine Reihe erfindungsgemäßer Verbindungen, die nach dem beschriebenen Verfahren hergestellt worden sind, aufgezählt. Zur Kennzeichnung der Polyadditionsverbindungen werden dabei die vorstehenden Symbole der Monomere - römische Ziffern für Isocyanate, Buchstaben für Poly-ole, -amine oder merkaptane, unterstrichene Ziffern für Blockierungsmittel - entsprechend ihren Einsatzverhältnissen verwendet. So bedeutet:

$(A)_2(I)_3(\underline{1})_2$ ein erfindungsgemäßes Perfluoralkylgruppen enthaltendes Polyurethan aus 2 Teilen des Perfluordiols A und 3 Teilen des Diisocyanats I, wobei die verbleibenden Isocyanatgruppen mit 2 Teilen von $\underline{1}$ blockiert worden sind:

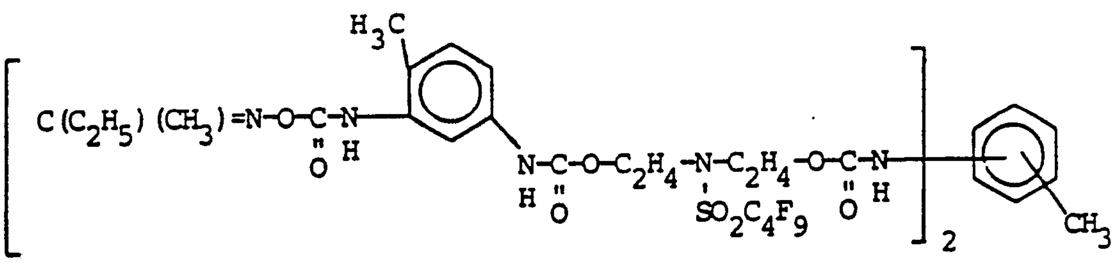

Tabelle 1: Beispiele erfindungsgemäßer Verbindungen

$(A)_2(B)_2(II)_3(V)_2(\underline{1})_2$
$(A)_6(O)_1(III)_3(IV)_3(VI)_3(\underline{1})_6$
$(B)_3(I)_3(IV)_1(\underline{2})_3$
$(B)_2(II)_1(V)_2(\underline{1})_2$
$(B)_2(II)_1(V)_2(\underline{2})_2$
$(B)_2(M)_1(II)_2(V)_2(\underline{1})_2$
$(B)_3(N)_1(I)_3(IX)_3(\underline{1})_3$
$(B)_4(II)_3(V)_2(\underline{1})_2$
$(B)_4(V)_4(VII)_2(\underline{1})_4$
$(C)_3(II)_2(V)_2(\underline{3})_2$
$(D)_2(L)_2(II)_3(V)_2(\underline{1})_2$
$(E)_2(M)_1(V)_2(VII)_2(\underline{1})_2$
$(F)_2(T)_2(II)_3(V)_2(\underline{5})_2$
$(G)_3(R)_1(II)_2(IV)_2(\underline{1})_2$

Die Charakterisierung der erfindungsgemäßen Verbindungen kann mit Hilfe der Infrarot- und der Kernresonanzspektroskopie erfolgen:

- Entsprechend den gewählten Bausteinen (Isocyanat, Polyol usw.) findet man die Resonanzbilder der Monomere in den $^1H$- bzw. $^{19}F$-Kernresonanzspektren der Polymere wieder, und zwar in der Intensität entsprechend den Einsatzverhältnissen.

Berücksichtigt werden muß jedoch eine Hoch- bzw. Tieffeldverschiebung von Molekülgruppen, die den Polykondensationszentren benachbart sind; so verschiebt sich z. B. die Resonanzfrequenz der Methylgruppe im Butanonoxim von 1,75 ppm im freien Molekül auf 1,89 ppm im Kondensat (rel. i. TMS, Lösemittel DMSO-$d_6$).

- Während die Kernresonanzspektren die eingesetzten Bausteine im Polymeren aufzeigen, ist mit Hilfe der IR-Spektroskopie die Polymerverknüpfung nachzuweisen. So findet man im Polykondensat z. B. keine Isocyantschwingungen mehr bei 2200 bis 2300 $cm^{-1}$, sondern kräftige Urethan-Carbonyl-Schwingungsbanden bei etwa 1700 $cm^{-1}$ und die Carbonyl-Schwingungsbanden der blockierten Isocyanate bei etwa 1650 $cm^{-1}$. Ebenfalls charakteristisch für alle erfindungsgemäßen Verbindungen sind die C-F-Schwingungsbanden im Vereich von 1100 bis 1300 $cm^{-1}$. Der Gegenstand der vorliegenden Erfindung soll anhand der folgenden Beispiele noch näher erläutert werden. (%-Angaben sind - soweit nichts anderes vermerkt ist - Gew.-%).

**Beispiel 1**

1175 g (2 Mol) der Verbindung B werden in 3200 ml Aceton (wasserfrei) gelöst und auf Siedetemperatur (56°C) erhitzt. 168 g des Isocyanats II (1 Mol) werden innerhalb von 30 min. zugetropft. Nach einer Stunde werden 440 g (2 Mol) des Isocyanats V zugegeben. Nach weiteren 3 h wird abgekühlt und langsam 192 g (2,2 Mol) Butanonoxim zugegeben. Der Reaktionsfortschritt kann IR-spektroskopisch verfolgt werden. Nach vollständiger Blockierung des überschüssigen Isocyanats ist keine Isocyanatschwingung bei 2300 $cm^{-1}$ mehr nachzuweisen. Das erfindungsgemäße Perfluoralkylgruppen-enthaltende Polyurethan kann durch Abziehen des Acetons isoliert werden und ist mit großem Erfolg auf verschiedene Substrate appliziert worden. Schmelzpunkt der Ssubstanz: 75-80°C

**Beispiel 2**

Ansatz wie Beispiel 1, jedoch erfolgte die Blockierung des überschüssigen Isocyanats mit 242 g (2,2 Mol) Resorcin. Die Wirkung des Polyurethans ist genausogut wie bei Beispiel 1. F.: 115-120°C.

**Beispiel 3**

38,7 g (0,1 Mol) der Verbindung A und 58,7 g (0,1 Mol) der Verbindung B werden in 500 ml Aceton (wasserfrei) gelöst und auf Siedehitze erwärmt. 25,2 g (0,15 Mol) der Verbindung II und 22 g (0,1 Mol) der Verbindung V werden wie in Beispiel 1 zugegeben. Nach Blockierung mit Butanonoxim 96 g (0,11 Mol) erhält man ein gut wirksames Produkt. F.: 80-90°C.

**Beispiel 4**

68,4 g der Verbindung L (0,2 Mol) wurden in 1 l Aceton gelöst, 33,6 g (0,3 Mol) der Verbindung II zugegeben und 1 h bei 50°C gerührt. Nach Zugabe von 117,4 g (0,2 Mol) der Verbindung B und 3 h Reaktionszeit werden 44,4 g (0,2 Mol) des Isocyanats V zugegeben. Nach weiteren 3 h wurde wie in Beispiel 1 mit 19,2 g (0,22 Mol) Butanonoxim blockiert. Auch das Produkt dieses Beispiels zeigt sehr gute Eigenschaften. F.: 95-100°C

**Beispiel 5**

0,01 Mol eines difunktionellen Polyethers mit dem Molekulargewicht 3822 (65 % Ethylenoxid, 35 % Propylenoxid) wurde in 100 ml Dioxan (wasserfrei) gelöst und mit 6,7 g (0,02 Mol) des Isocyanats VII 30' bis 50°C, umgesetzt. Die weitere Reaktion erfolgte mit 14,4 g (0,02 Mol) der Verbindung E ($x + y = 5$), 4,5 g (0,02 Mol) des Isocyanats V und 2 g (0,02 Mol) Butanonoxim analog Beispiel 4. F.: 90-95°C

**Beispiel 6**

92 g (1 Mol) der Verbindung N wurde zu einer Lösung von 522 g des Isocyanats IX in 4 l Methylisobutylketon getropft. Nach Zugabe von 1,76 kg der Verbindung B wurde 3 h auf 80°C erwärmt. Nach Abkühlen auf 50°C wurden 480 g (3 Mol) des Isocyanats I zugegeben, nach weiteren 3 h 287 g (3,3 Mol) Butanonoxim. Auch diese Verbindung hat vortreffliche öl- und wasserabstoßende Eigenschaften auf verschiedenen Substraten.
F.: 200°; Zersetzung

**Beispiel 7**

6 g (0,1 Mol) der Verbindung R (1 = 2) wurde in 500 ml Aceton gelöst und mit 33,6 g (0,2 Mol) der Verbindung II versetzt. Nach 30 min. wurden 137 g (0,3 Mol) der Verbindung G zugegeben und 3 h bei 50°C gerührt. Nach Umsetzung mit 74,6 g (0,2 Mol) der Verbindung IV und Blockierung mit 35 g (0,4 Mol) Butanonoxim entsprechend Beispiel 1 wurde auch in diesem Beispiel ein erfindungsgemäßes Perfluoralkylligandenenthaltendes Polyurethan gewonnen.

**Beispiel 8**

Zur Illustration der günstigen Eigenschaften der erfindungsgemäßen Verbindungen wird eine 0,2 %-ige Lösung des produktes aus Beispiel 1 in Aceton hergestellt und ein stück Polyamidgewebe damit getränkt. Das Lösemittel wird abgedampft, die Wirksubstanz 3 Minuten bei 150°C, fixiert. Auf dem Gewebe haftet 0,1 mg gebundenes Fluor pro Gramm (Probe A). Von einer marktgängigen Perfluoralkylurethanverbindung wurde eine 0,2 % und eine 1 %-ige Lösung in Aceton hergestellt und je ein Stück Polyamidgewebe damit getränkt. Die beiden Vergleichsproben wurden entsprechend Probe A getrocknet und fixiert. Es sind etwa 0,1 mg (Vergleichsprobe B) und 0,5 mg (Vergleichsprobe C) gebundenes Fluor pro Gramm Gewebe aufgetragen.

Probe A mit dem erfindungsgemäßen Polyurethan zeigt sehr gute öl- und wasserabstoßende Eigenschaften, ebenso die Vergleichsprobe C, die jedoch mit der 5-fachen Menge an gebundenem Fluor ausgerüstet ist. Vergleichsprobe B wird nach kurzer Zeit von Wasser- und Öltropfen benetzt.

Um weiterhin die Vorteile der chemischen Fixierung der erfindungsgemäßen Perfluoralkylketten enthaltenden Polyurethane zu demonstrieren, wurden die Probe A und die Vergleichsprobe C 60 Minuten mit heißer Waschmittellauge behandelt und anschließend 30 Minuten unter fließendem Warmwasser ausgewaschen. Nach dem Trocknen besitzt die Probe A unverändert sehr gute Öl- und Wasser-abstoßende Eigenschaften, die Vergleichsprobe C hat die ihren weitgehend verloren.

**Beispiel 9**

Dieses Beispiel zeigt die günstigen Eigenschaften der erfindungsgemäßen Verbindungen für die schmutzabweisende Ausrüstung von Polyamid-Teppichgarn.

Es wird eine wässrige Emulsion A hergestellt, die 21 Gew.-% einer Verbindung gemäß Beispiel 1 enthält (entsprechend 7 Gew.-% Fluor).

Es wird weiterhin eine wässrige Emulsion B hergestellt, die 12 Gew.-% eines Avivageöls enthält, bestehend aus 40 Gew.-% eines aliphatischen Esters, 20 Gew.-% ethoxyliertem Rizinusöl und 40 Gew.-% eines fettalkoholischen Phosphorsäureesters.

Ein Teil der Emulsion A wird mit 7 Teilen der Emulsion B zu einer Emulsion C gemischt.

Es werden nun zwei Polvamid-Teppichgarne hergestellt, die sich nur dadurch voneinander unterscheiden, daß auf das eine die Emulsion C aufgetragen ist ("Probegarn"), auf das andere Garn die Emulsion B ("Standardgarn"). Sowohl die Emulsion B als auch die Emulsion C wird während des Spinnens der Garn mittels einer Präparationsgalette aufgetragen. Im Falle des Probegarns wird so viel von der Emulsion C aufgetragen, daß der Fluorgehalt dieses Garns ungefähr 500 ppm (parts per million) beträgt.

Sowohl das Standardgarn als auch das Probegarn werden in konventioneller Weise verstreckt und texturiert. Durch die bei dieser Streck-Texturierbehandlung übliche Erwärmung auf 150 bis 175°C wird die dem Probegarn anhaftende Perfluoralkylverbindung chemisch fixiert.

Die beiden Garnarten (Probegarn und Standardgarn) werden jeweils zu einen Tuftteppich verarbeitet ("Probeteppich" bzw. "Standardteppich"). Die so erhaltenen Teppiche werden danach in einer Haspelkufe gefärbt und dann latexiert. Bei Probe- und Standardteppich werden die schmutzabstoßende Wirkung, die wasserabstoßende Wirkung und die ölabstoßende Wirkung bestimmt (siehe untenstehende Tabelle).

| Eigenschaft | | Standardteppich | Probeteppich |
|---|---|---|---|
| schmutzabstoßende Wirkung | (1) | 2 | 4 |
| wasserabstoßende Wirkung | (2) | keine | gute |
| ölabstoßende Wirkung | (3) | 1 | 2-3 |

(1) Die Bestimmung erfolgte, nachdem der Probe- und Standardteppich im Praxistest angeschmutz wurde (10.000 Begehungen). Für Vergleichszwecke blieben Teile des Probe- und Standardteppichs unbelaufen. Bei der Bestimmung wurde der Farbunterschied zwischen den 10.000 Mal belaufenen und den unbelaufenen Teilen des Standard- bzw. Probeteppichs gemessen. Diese Farbmessung erfolgte gemäß "AATCC-Test Method 121-1970". Die Farbunterschiedsbewertung läuft hierbei zwischen 1 und 5, wobei 1 auf eine starke, 5 auf eine äußerst geringe Verschmutzung hinweist.

(2) Visuelle Wahrnehmung: es wurden mit einer Pipette Wassertröpfchen auf Probe- und Standardteppich aufgetragen. Der Standardteppich zeigte eine sofortige Benetzung, auf dem Probeteppich blieb das Wasser in Form von Tröpfchen liegen.

(3) Gemessen gemäß AATCC-test No. 118-1975. Die Skala geht von 1 bis 8 wobei ein höherer Wert eine bessere Ölabstoßende Wirkung angibt.

Aus diesen Experimenten geht hervor, daß die aufgebrachte Perfluoralkylverbindung auch nach der Verarbeitung zu einem Teppich und der Anwendung eines Färbeverfahrens dem Teppich ausgezeichnete schmutz-, wasser- und ölabstoßende Wirkung verleiht.

## Patentansprüche

1. Perfluoralkylliganden-enthaltende Polyurethane mit der wiederkehrenden Formeleinheit

$$-[X(NH-\overset{O}{\overset{\parallel}{C}}-O-R_F-O-\overset{O}{\overset{\parallel}{C}}-NH)_{n-1}]-$$

und Kettenenden der allgemeinen Formel

$-YA_m$,

wobei die wiederkehrende Formeleinheit im Polyurethan gegebenenfalls durch Einheiten der allgemeinen Formel

$$-[Z-[(NH-\overset{O}{\overset{\parallel}{C}}-E)_a-R-(E-\overset{O}{\overset{\parallel}{C}}-NH)_b]_{p-1}]-$$

substituiert sein kann, und wobei

X, Y und Z die Gerüstradikale aliphatischer oder aromatischer Di- und Polyisocyanate,
$R_F$ ein Mitglied aus der Gruppe der mono- oder difunktionellen N-(Sulfonylperfluoralkyl)aminoalkanolderivate,
n die Anzahl der Isocyanatgruppen am Gerüstradikal X (ganze Zahl von 2 bis 25),
A eine mit einem geeigneten Blockierungsmittel geschützte Isocyanatgruppe,
m die Anzahl der blockierten Isocyanatgruppen A am Gerüstradikal Y (ganze Zahl von 1-5)
E die Atome O oder S, sowie die Molekülgruppe -NR'-, mit R' = H, Alkyl oder Aryl,
R ein Di- oder Poly-Radikal, abgeleitet aus einem Di(Poly-)-alkohol, -amin oder -thiol- oder einer Kombination aus diesen,
a, b die Anzahl der -OH, -NR'H oder -SH Funktionen in den eingesetzten Alkoholen, Aminen oder Thiolen $R(EH)_{(a+b)}$ (ganze Zahl von 0 bis 10), und
p die Anzahl der Isocyanatgruppen am Gerüstradikal Z (ganze Zahl von 0 bis 25) bedeuten.

2. Perfluoralkylliganden - enthaltende Polyurethane gemäß Anspruch 1, dadurch gekennzeichnet, daß als Blockierungsmittel ein Oxim verwendet wird.

3. Verfahren zur Herstellung der Perfluoralkylliganden enthaltenden Polyurethane gemäß einem der Ansprüche 1 bis 2, dadurch gekennzeichnet, daß man Perfluoralkylliganden enthaltende Dialkohole der allgemeinen Formel

$R_F-(OH)_2$,

in der $R_F$ die obengenannte Bedeutung hat, gegebenenfalls zusammen mit nichtfluorierten Di- oder Polyalkoholen, bzw. -aminen oder -merkaptanen der allgemeinen Formel

$R-(EH)_{(a+b)}$
in der R, E und (a+b) die vorstehenden Bedeutungen besitzen, in Mischung oder in Blöcken mit einem oder mehreren Di- oder Polyisocyanaten der allgemeinen Formeln

$$X(NCO)_n, \qquad Y(NCO)_{(m+l)}, \qquad Z(NCO)_p,$$

in denen X, Y, Z, n, p und m die vorstehend angegebenen Bedeutungen haben, im Überschuß kondensiert, so daß die entstehenden Polyurethanketten bzw. -netze an den Kettenenden freie Isocyanatgruppen bestitzen, die abschließend mit einer geeigneten Schutzgruppe blockiert werden.

4. Verwendung der Perfluoralkylliganden enthaltenden Polyurethane gemäß einem der Ansprüche 1 bis 2, zur schmutz-, wasser- und ölabweisenden Ausrüstung von Oberflächen.

5. Verwendung der Perfluoralkylliganden-enthaltenden Polyurethane gemäß einem der Ansprüche 1 bis 2, zur schmutz-, wasser- und ölabweisenden Ausrüstung von textilen Geweben und Fasern.

**Claims**

1. Polyurethanes containing perfluoroalkyl ligands having the following recurrent formula unit:

$$-[X(NH-\overset{O}{\overset{\|}{C}}-O-R_F-O-\overset{O}{\overset{\|}{C}}-NH)_{n-1}]-$$

and chain ends corresponding to the general formula:
$-YA_m$
the recurrent formula unit in the polyurethane being optionally substituted by units of the general formula:

$$-[Z-[(NH-\overset{O}{\overset{\|}{C}}-E)_a-R-(E-\overset{O}{\overset{\|}{C}}-NH)_b]_{p-1}]- \quad ,$$

wherein

| | |
|---|---|
| X,Y and Z | denote the structural radicals of aliphatic or aromatic di- or polyisocyanates, |
| $R_F$ | denotes a member of the group of monofunctional or difunctional N-(sulphonylperfluoroalkyl)aminoalkyl derivatives, |
| n | denotes the number of isocyanate groups on the structural radical X (integer from 2 to 25), |
| A | denotes an isocyanate group protected by a suitable blocking agent, |
| m | denotes the number of blocked isocyanate groups A on the structural radical Y (integer from 1 to 5), |
| E | denotes the atoms O or S and the molecular group -NR'- wherein R' = H,alkyl or aryl, |
| R | denotes a di- or polyradical derived from a d-(poly)-alcohol, -amine or -thiol or a combination of these, |
| a,b | denotes the number of -OH, -NR'H or -SH functions in the alcohols, amines or thiols $R(EH)_{(a+b)}$used (integer from 0 to 10) and |
| p | denotes the number of isocyanate groups on the structural radical Z (integer from 0 to 25). |

2. Polyurethanes containing perfluoroalkyl ligands according to claim 1, characterised in that an oxime is used as blocking agent.

3. Process for the preparation of polyurethanes containing perfluoroalkyl ligands according to one of the claims 1 to 2, characterised in that di-alcohols containing perfluoroalkyl ligands in accordance with the following general formula
$R_F-(OH)_2$
wherein $R_F$ has the meaning indicated above, optionally together with non-fluorinated di- or poly-alcohols or -amines or -mercaptans corresponding to the following general formula:
$-R-(EH)_{(a+b)}$
wherein R,E and (a+b) have the meanings indicated above are condensed as mixtures or in blocks with an excess of one or more di- or polyisocyanates corresponding to the general formulae
$X(NCO)_n$, $Y(NCO)_{(m+l)}$, $Z(NCO)_p$
wherein X, Y, X, n, p and m have the meanings indicated above, so that the resulting polyurethane chains or networks have free isocyanate groups at their chain ends, which free isocyanate groups are finally blocked with a suitable protective group.

4. Use of the polyurethanes containing perfluoroalkyl ligands according to one of the claims 1 to 2 for imparting dirt repellent, water repellent and oil repellent finishes to surfaces.

5. Use of the polyurethanes containing perfluoroalkyl ligands according to claims 1 to 2 for imparting dirt-repellent, water-repellent and oil repellent finishes to textile fabrics and fibres.

**Revendications**

1. Polyuréthanes contenant des coordinats perfluoralkyle et comportant le motif périodique de formule:

$$-[X(NH-\overset{O}{\overset{\|}{C}}-O-R_F-O-\overset{O}{\overset{\|}{C}}-NH)_{n-1}-]$$

et des terminaisons de chaînes de formule générale :

$-YA_m$,

le motif périodique de la formule ci-dessus pouvant également être substitué, dans le polyuréthane, par des motifs de formule générale:

$$-[Z-[(NH-\overset{O}{\overset{\|}{C}}-E)_a-R-(E-\overset{O}{\overset{\|}{C}}-NH)_b]_{p-1}]- \quad ,$$

formules dans lesquelles

X, Y et Z représentent les radicaux d'ossature de diisocyanates et de polyisocyanates aliphatiques ou aromatiques;

$R_F$ représente un membre choisi parmi le groupe comprenant les dérivés de N-(sulfonyl-perfluoralkyl)amino-alcanols monofonctionnels ou difonctionnels;

n représente le mombre de groupes isocyanate se trouvant sur le radical d'ossature X (nombre entier de 2 à 25);

A représente un groupe isocyanate protégé par un agent de blocage approprié;

m représente le nombre de groupes isocyanate bloqués A présents sur le radical d'ossature Y (nombre entier de 1 à 5);

E représente les atomes O ou S, de même que le groupe moléculaire -NR'-, R' représentant H, un groupe alkyle ou un groupe aryle;

R représente un di- ou un poly-radical dérivant d'un di(poly-)-alcool, d'une di(poly-)-amine ou d'un di(poly-)-thiol ou encore d'une combinaison de ces derniers;

a, b représentent le nombre de fonctions -OH, -NR'H ou -SH se trouvant dans les alcools, les amines ou les thiols $R(EH)_{(a+b)}$ (nombre entier de 0 à 10) utilisés, et

p représente le nombre de groupes isocyanate présents sur le radical d'ossature Z (nombre entier de 0 à 25).

2. Polyuréthanes contenant des coordinats perfluoralkyle selon la revendication 1, caractérises en ce que, comme agent de blocage, on utilise une oxime.

3. Procédé de préparation de polyuréthanes contenant des coordinats perfluoralkyle selon une des revendications 1 et 2, caractérisé en ce qu'on condense, en excès, des dialcools contenant des coordinats perfluoralkyle de formule générale :

$R_F-(OH)_2$

dans laquelle $R_F$ a la signification indiquée ci- dessus, éventuellement conjointement avec des di- ou polyalcools, des di- ou poly-amines ou des di- ou poly-mercaptans non fluorés de formule générale:

$R-(EH)_{(a+b)}$

dans laquelle R, E et (a+b) ont les significations indiquées ci-dessus, en mélange ou en blocs avec un ou plusieurs di- ou poly-isocyanates répondant aux formules générales:

$X(NCO)_n$, $Y(NCO)_{(m+l)}$, $Z(NCO)_p$

dans lesquelles X, Y, Z, n, p et m ont les significations indiquées ci-dessus, de telle sorte que les chaînes ou les réseaux de polyuréthanes formés comportent, aux terminations des chaînes, des groupes isocyanate libres qui sont finalement bloqués par un groupe protecteur approprié.

4. Utilisation des polyuréthanes contenant des coordinats perfluoralkyle selon une des revendications 1 et 2, en vue de conférer, à des surfaces, un apprêt anti-poussières, hydrophobe et oléophobe.

5. Utilisation des polyuréthanes contenant des coordinats perfluoralkyle selon une des revendications 1 et 2 en vue de conférer, à des fibres et des tissus textiles, un apprêt antipoussières, hydrophobe et oléophobe.